# EUROPÄISCHE PATENTANMELDUNG

(11) **EP 1 375 939 A2**
(43) Veröffentlichungstag der Anmeldung: **02.01.2004**
(21) Anmeldenummer: 03010151.3
(22) Anmeldetag: 06.05.2003
(51) Int. Cl.: F16C 19/30, F16C 43/04

(54) **Montage einer Axialrollerlagerbaueinheit**

(30) Priorität: 20.06.2002 DE 10227377
(71) Anmelder: INA-Schaeffler KG, 91074 Herzogenaurach (DE)
(72) Erfinder: Fugel, Wolfgang, 90453 Nürnberg (DE); Reimchen, Alexander, 91074 Herzogenaurach (DE)

(57) **Zusammenfassung**

Eine einteilig ausgebildete Axialwinkelscheibe weist einen Radialabschnitt auf, an den sich eine axiale Abwinkelung anschließt, die wenigstens an einer Umfangsstelle mit einer radial hervorspringenden Haltenase versehen ist, wobei in erfindungsgemäßer Weise die Haltenase (2.2.1, 5.2.1, 8.2.1, 8.3.1) mit Hilfe einer Anprägung derart hergestellt ist, dass ein nicht unterbrochener Materialzusammenhang zwischen Abwinkelung (2.2, 5.2, 8.2, 8.3) und Haltenase (2.2.1, 5.2.1, 8.2.1, 8.3.1) realisiert ist, wobei die sich in radialer Richtung erstreckenden Nasenhöhe eine maximalen Betrag s von 2/3 der Wandstärke b der axialen Abwinkelung (2.2, 5.2, 8.2, 8.3) annimmt.

## Beschreibung

### Anwendungsgebiet der Erfindung

Die Erfindung betrifft einteilig ausgebildete Axialwinkelscheibe, insbesondere für ein Axiallager, mit einem eine Laufbahn bildenden Radialabschnitt, an den sich zumindest eine axiale Abwinkelung anschließt, die wenigstens an einer Umfangsstelle mit einer radial hervorspringenden Haltenase versehen ist, welche ein zugehöriges Bauteil hintergreift, so dass eine aus Axialwinkelscheibe und Bauteil bestehende unverlierbare Baueinheit gebildet ist und/oder welche in eine zugehörige Ausnehmung einer Anschlußkonstruktion eingreift, so dass eine aus Axialwinkelscheibe und Anschlußkonstruktion bestehende unverlierbare Baueinheit gebildet ist, wobei die Haltenase in Montagerichtung einen unter einem Winkel ansteigenden Verlauf nimmt und an ihrem Ende eine in radialer Richtung abfallende Anlaufkante aufweist.

### Hintergrund der Erfindung

Eine derartige gattungsgemäße Axialwinkelscheibe ist aus der DE-OS 22 64 117 vorbekannt. Die in den Figuren 1 und 2 dargestellte Axialwinkelscheibe weist einen eine Laufbahn bildenden Radialabschnitt auf, an dessen äußeren peripheren Ende sich eine axiale Abwinkelung anschließt. An drei gleichmäßig voneinander beabstandeten Umfangsstellen ist die axiale Abwinkelung mit Haltenasen versehen, die einen mit Zylinderrollen bestückten Axialkäfig hintergreifen, so dass eine aus Axialwinkelscheibe und Rollenkranz bestehende Baueinheit gebildet ist. Die Haltenasen ragen aus der axialen Abwinkelung in Richtung Lagerachse des Lagers unter einem spitzen Winkel hervor und weisen an ihrem in Radialabschnitt gerichteten Ende eine abfallende Anlaufkante auf. Auf diese Weise wird es ermöglicht, dass der Axialnadelkranz nach dem Prinzip eines Schuhlöffels in Richtung Radialabschnitt in die Axialwinkelscheibe eingeschoben wird, bis die Haltenase hinter dem Axialnadelkranz verschnappt. Diese Haltenasen werden in der genannten Vorveröffentlichung derart realisiert, dass in der axialen Abwinkelung wenigstens ein Einschnitt, dass heißt eine Materialtrennung vorhanden ist, aus der die Haltenase mit Hilfe eines Stempels in radialer Richtung ausgeformt werden.

Nachteilig dabei ist, dass die Anlaufkante als eine Schnittkante ausgebildet ist, so dass durch den Einschnitt bedingt Einrisse auftreten können, die zu einem Abbrechen der gesamten Haltenase führen. Es ist weiter von Nachteil, dass sich solche Einrisse bis in den Laufbahnbereich des Axiallagers erstrecken können. Im Extremfall führt dies dazu, dass das gesamte Lager ausfällt. Ungünstig ist dabei auch, dass durch die Schnittkante bedingt eine rauhe Oberfläche entsteht, an der der Käfig anläuft. Dies kann den Käfig beschädigen oder im Extremfall zu einer schädlichen Spanbildung führen. Schließlich ist bedingt durch den erforderlichen Einschnitt die Ausbildung der Haltenase relativ aufwendig, weil der Stempel mit einer scharfen Schnittkante ausgestattet sein muss.

### Zusammenfassung der Erfindung

Aufgabe der Erfindung ist es daher, eine Axialwinkelscheibe zu entwickeln, die sich einerseits leicht herstellen lässt und die andererseits eine sichere Fixierung erlaubt.

Erfindungsgemäß wird diese Aufgabe nach dem kennzeichnenden Teil von Anspruch 1 in Verbindung mit dessen Oberbegriff dadurch gelöst, dass die Haltenase mit Hilfe einer Anprägung derart hergestellt ist, dass ein nicht unterbrochener Materialzusammenhang zwischen Abwinkelung und Haltenase realisiert ist, wobei die sich in radialer Richtung erstreckende Nasenhöhe einen maximalen Betrag von 2/3 der Wandstärke der axialen Abwinkelung annimmt und die Haltenase in verrundeter Form ausgebildet ist.

Diese erfindungsgemäße Ausgestaltung der Axialwinkelscheibe vermeidet durch die fehlenden Einschnitte die Ausbildung von möglichen Einrissen, die in der bereits beschriebenen Weise die die Funktion der Axialwinkelscheibe negativ beeinflussen. Es wurde gefunden, dass auch bei einer rein spanlosen Ausbildung der Haltenasen ohne Einschnitt deren Höhe einen maximalen Betrag von 2/3 der Wandstärke der axialen Abwinkelung annehmen darf und verrundet sein muss, weil nur unter diesen Bedingungen das Auftreten von Einrissen zuverlässig verhindert werden kann. Durch die Erfindung wird eine stabile, verdichtete Haltenase in einer genau definierten Form realisiert, deren Oberflächenqualität sehr eben ist und somit die Reibung minimiert.

Vorteilhafte Ausgestaltungen der Erfindung sind in den Ansprüchen 2 bis 6 beschrieben.

So geht aus Anspruch 2 hervor, dass die axiale Abwinkelung am äußeren peripheren Ende des Radialabschnittes angeordnet ist und die Haltenase einen Käfig hintergreift, so dass ein aus Axialwinkelscheibe und Käfig bestehendes Axiallager gebildet ist.

Nach einem weiteren Merkmal der Erfindung gemäß Anspruch 3 soll die axiale Abwinkelung am inneren peripheren Ende des Radialabschnittes angeordnet sein und die Haltenase in eine zugehörige Ausnehmung eines Gehäuses eingreifen, so dass eine aus Axiallager und Gehäuse bestehende unverlierbare Baueinheit gebildet ist.

Nach einem weiteren zusätzlichen Merkmal nach Anspruch 4 soll die Haltenase an mehreren gleichmäßig voneinander beabstandeten Umfangsstellen angeordnet sein.

Nach Anspruch 5 soll die Haltenase in eine umlaufende Nut eingreifen, wobei nach Anspruch 6 in diesem Fall vorgesehen ist, dass die Nut im Längsschnitt gesehen eine rechteck- oder einen dreieckförmigen Verlauf aufweist.

Die Erfindung wird an nachstehenden Ausführungsbeispielen näher erläutert.

### Kurze Beschreibung der Zeichnungen

Es zeigen:
- Figur 1: einen Längsschnitt durch ein erfindungsgemäß ausgebildetes Axiallager,
- Figur 2: eine vergrößerte Darstellung einer Einzelheit gemäß Figur 1,
- Figuren 3, 4 und 5: die Montage eines erfindungsgemäß ausgestalteten Lagers in eine Anschlußkonstruktion,
- Figuren 6 und 7: eine vergrößerte Darstellung einer Einzelheit aus Figur 5 und
- Figur 8: eine perspektivische Darstellung einer erfindungsgemäß ausgebildeten Axialwinkelscheibe.

### Ausführliche Beschreibung der Zeichnungen

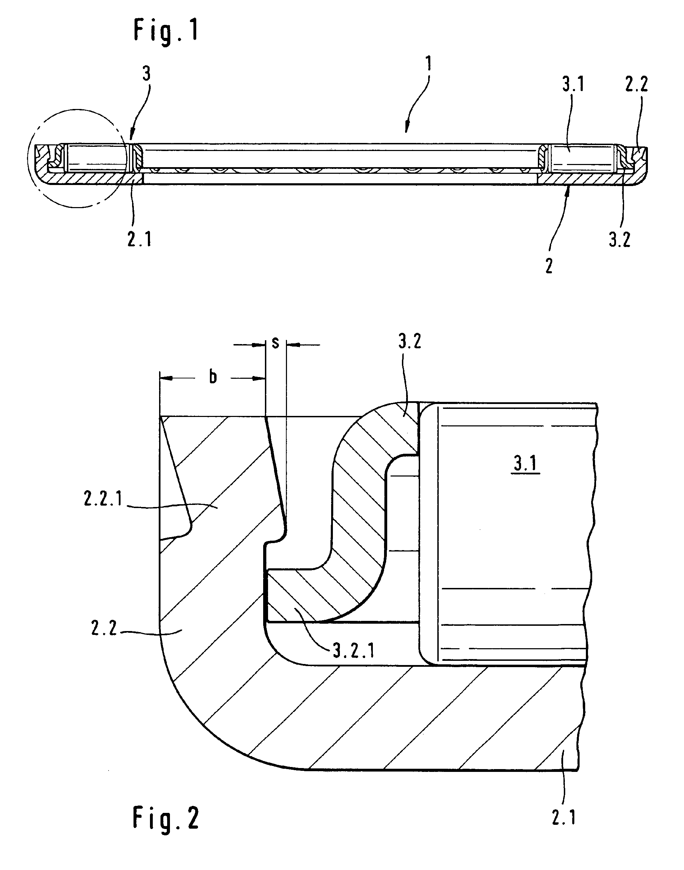

Das in den Figuren 1 und 2 dargestellte Axiallager 1 besteht aus der Axialwinkelscheibe 2, deren Radialabschnitt 2.1 an seinem äußeren Ende, dass heißt, an seinem Außendurchmesser, in die axiale Abwinkelung 2.2 übergeht. Der Radialabschnitt 2.1 bildet eine Laufbahn für den aus Lagernadeln 3.1 und Lagerkäfig 3.2 bestehenden Axialnadelkranz 3. Wie insbesondere die vergrößerte Darstellung in Figur 2 erkennen lässt, ist die axiale Abwinkelung 2.2 der Axialwinkelscheibe 2 mit einer Haltenase 2.2.1 versehen, die mittels Materialverschiebung durch einen Anprägevorgang hergestellt ist. Dabei wird die örtlich radial aus der Abwinkelung 2.2 austretende Haltenase 2.2.1 spanlos durch einen Stempel mit einer zugehörigen Matrize erzeugt. Es ist weiter erkennbar, dass von oben betrachtet, von der Richtung aus, aus der beim Montagevorgang der Axialnadelkranz 3 in die Axialwinkelscheibe 2 eingeschoben wird, die Haltenase 2.2.1 unter einem spitzen Winkel ansteigt und an ihrem Ende radial steil nach außen abfällt. Die mit s bezeichnete Nasenhöhe ist abhängig von der radialen Toleranz zwischen Axialwinkelscheibe 2 und Lagerkäfig 3.2 und muss mindestens so groß sein wie deren radiales Spiel. In erfindungsgemäßer Weise soll die Nasenhöhe s einen maximalen Wert von 2/3 der Wandstärke b der axialen Abwinkelung 2.2 nicht überschreiten. Dadurch ist sichergestellt, dass auch beim Prägevorgang keine feinen Risse entstehen können, die sich in der beschriebenen nachteiligen Weise auf die Gesamtlagerung auswirken können. Wie die Figur 2 weiter zeigt, wird ein axiales Herausgleiten des Axialnadelkranzes 3 durch Anlage des radialen Flansches 3.2.1 des Lagerkäfigs 3.2 an der Haltenase 2.2.1 verhindert. Durch den Abstand von der unteren Kante bis zum Radialabschnitt 2.1 ist gleichzeitig die axiale Bewegungsmöglichkeit des Axialnadelkranzes 3 bestimmt. Die Haltenase 2.2.1 weist von der Montageseite her betrachtet die Form einer Harpune auf, so dass nach dem Einschnappen der Lagerkäfig 3.2 die Axialwinkelscheibe 2 nicht verlassen kann. Beim Einschieben des Lagerkäfigs 3.2 in die Axialwinkelscheibe 2 wird sich dieser aufgrund seiner geringeren Stabilität gegenüber der Axialwinkelscheibe 2 elastisch verformen. Die Anzahl der verwendeten Haltenasen 2.2.1 ist vom Durchmesser der Axialwinkelscheibe 2 abhängig. Je größer der Durchmesser, desto mehr Haltenasen 2.2.1 sind vorzusehen, da bei einer verringerten Anzahl die Überdeckung steigt und somit die Montage erschwert ist. Als vorteilhaft hat es sich erwiesen, bei einem Durchmesser der Axialwinkelscheibe 2 von mehr als 60 mm sechs Haltenasen 2.2.1 vorzusehen.

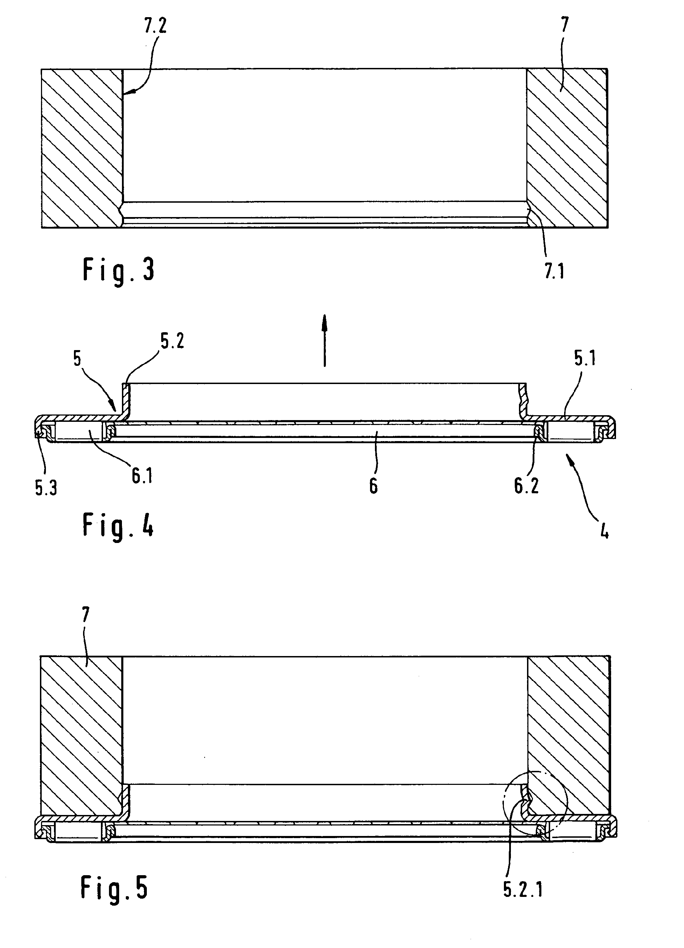

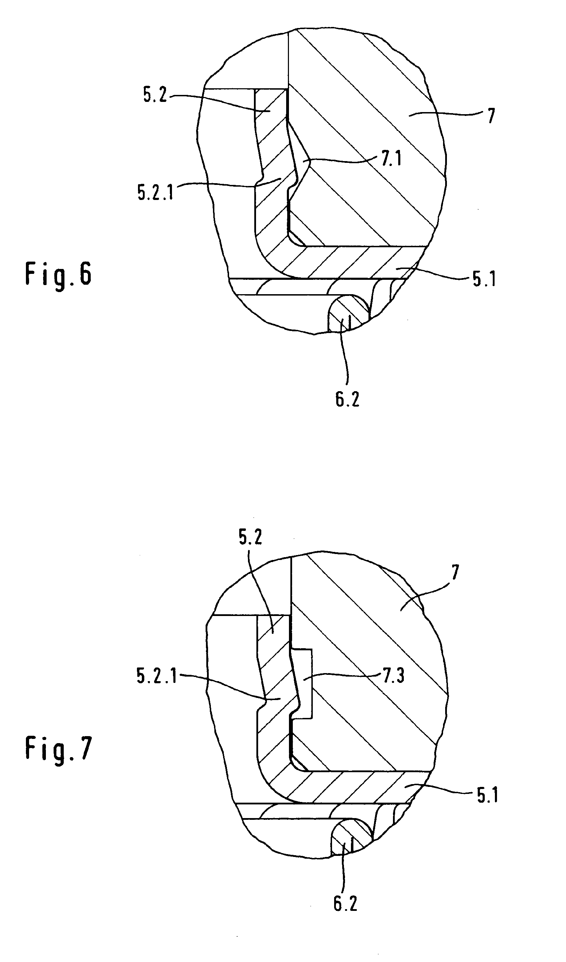

In den Figuren 3, 4, 5 und 6 ist ein Axiallager 4 gezeigt, dessen Axialwinkelscheibe 5 wiederum einen Radialabschnitt 5.1 aufweist, der als Laufbahn für im Käfig 6.2 geführte Lagernadeln 6.1 des Axialnadelkranzes 6 dient. Die Axialwinkelscheibe 5 ist sowohl am äußeren als auch am innere peripheren Ende, gleichbedeutend mit Außen- und Innendurchmesser, mit der axialen Abwinkelung 5.3, 5.2 versehen, die sich in entgegengesetzter Richtung erstrecken. Die innere axiale Abwinkelung 5.2 ist in erfindungsgemäßer Weise mit den Haltenasen 5.2.1 versehen, die in eine Nut 7.1 des Gehäuses 7 einschnappen, so dass das Axiallager 4 fest an diesem fixiert ist. Wie die Figuren 3, 4 und 5 weiter zeigen, wird das Axiallager 4 in Pfeilrichtung, dass heißt, in Montagerichtung dem Gehäuse 7 angenähert und mit der inneren axialen Abwinkelung 5.2 in die Aufnahmebohrung 7.2 des Gehäuses 7 eingeführt und verschnappt. Die in Figur 7 gezeigte Nut 7.3 unterscheidet sich von der in Figur 6 lediglich durch ihre Form. Sie ist rechteckförmig ausgebildet.

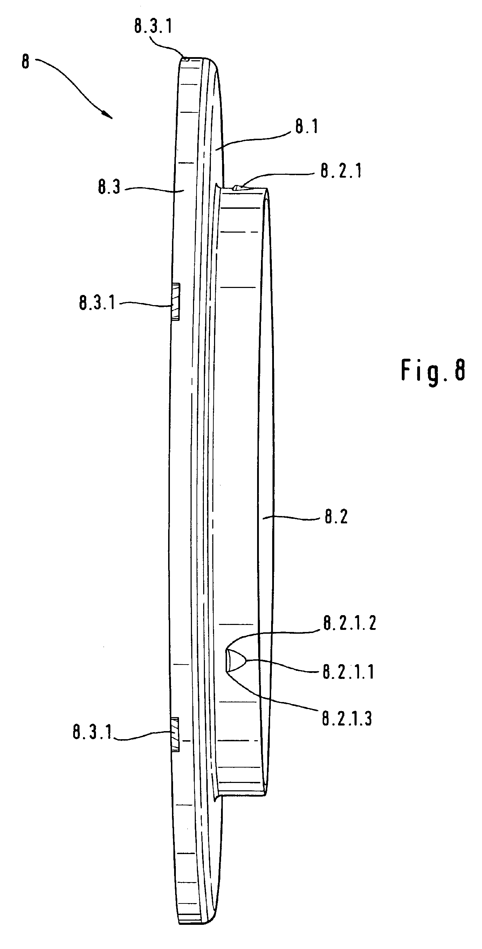

In Figur 8 schließlich ist eine weitere Axialwinkelscheibe 8 in perspektivischer Darstellung gezeigt, die wiederum den Radialabschnitt 8.2 aufweist, der an seinem Innendurchmesser in die axiale Abwinkelung 8.2 und an seinem Außendurchmesser in die axiale Abwinkelung 8.3 übergeht. In erfindungsgemäßer Weise sind beide Abwinkelungen 8.2, 8.3 mit Haltenasen 8.2.1, 8.3.1 versehen, die zueinander entgegengesetzt gerichtet sind. Bei dieser Darstellung ist besonders gut die verrundete Ausbildung der Haltenase 8.2.1 zu erkennen. Diese findet ihren Ursprung im Punkt 8.2.1.1, steigt in axialer Richtung an und verbreitet sich in Umfangsrichtung und endet in den voneinander beabstandeten Punkten 8.2.1.2 und 8.2.1.3. Die Punkte 8.2.1.2 und 8.2.1.3 sind durch eine bogenförmige Linie miteinander verbunden. Auf diese Weise sind Haltenasen 8.2.1, 8.3.1 geschaffen, die eine genau definierte, verdichtete und somit stabile Form aufweisen und eine hohe Oberflächengüte besitzen.

### Bezugszeichen

- 1: Axiallager
- 2: Axialwinkelscheibe
- 2.1: Radialabschnitt
- 2.2: axiale Abwinkelung
- 2.2.1: Haltenase
- 3: Axialnadelkranz
- 3.1: Lagernadel
- 3.2: Käfig
- 3.2.1: radialer Flansch
- 4: Axiallager
- 5: Axialwinkelscheibe
- 5.1: Radialabschnitt
- 5.2: axiale Abwinkelung
- 5.2.1: Haltenase
- 5.3: axiale Abwinkelung
- 6: Axialnadelkranz
- 6.1: Lagernadel
- 6.2: Käfig
- 7: Gehäuse
- 7.1: Nut
- 7.2: Aufnahmebohrung
- 7.3: Nut
- 8: Axialwinkelscheibe
- 8.1: Radialabschnitt
- 8.2: axiale Abwinkelung
- 8.2.1: Haltenase
- 8.2.1.1: Punkt
- 8.2.1.2: Punkt
- 8.2.1.3: Punkt
- 8.3: axiale Abwinkelung
- 8.3.1: Haltenase
- s: Nasenhöhe
- b: Wandstärke

## Patentansprüche

1. Einteilig ausgebildete Axialwinkelscheibe, insbesondere für ein Axiallager, mit einem eine Laufbahn bildenden Radialabschnitt, an den sich zumindest eine axiale Abwinkelung anschließt, die an wenigstens einer Umfangsstelle mit einer radial hervorspringenden Haltenase versehen ist, welche ein zugehöriges Bauteil hintergreift, so daß eine aus Axialwinkelscheibe und Bauteil bestehende unverlierbare Baueinheit gebildet ist und/oder welche in eine zugehörige Ausnehmung einer Anschlußkonstruktion eingreift, so daß eine aus Axialwinkelscheibe und Anschlußkonstruktion bestehende unverlierbare Baueinheit gebildet ist, wobei die Haltenase in Montagerichtung einen unter einem Winkel ansteigenden Verlauf nimmt und an ihrem Ende eine in radialer Richtung abfallende Anlaufkante aufweist, **dadurch gekennzeichnet, daß** die Haltenase (2.2.1, 5.2.1, 8.2.1, 8.3.1) mit Hilfe einer Anprägung derart hergestellt ist, daß ein nicht unterbrochener Materialzusammenhang zwischen Abwinkelung (2.2, 5.2, 8.2, 8.3) und Haltenase (2.2.1, 5.2.1, 8.2.1, 8.3.1) realisiert ist, wobei die sich in radialer Richtung erstreckende Nasenhöhe einen maximalen Betrag s von 2/3 der Wandstärke b der axialen Abwinkelung (2.2, 5.2, 8.2, 8.3) annimmt und die Haltenase (2.2.1, 5.2.1, 8.2.1, 8.3.1) in verrundeter Form ausgebildet ist.

2. Axialwinkelscheibe (2) nach Anspruch 1, **dadurch gekennzeichnet, daß** die axiale Abwinkelung (2.2) am äußeren peripheren Ende des Radialabschnittes (2.1) angeordnet ist und die Haltenase (2.2.1) einen Käfig (3.2) hintergreift, so daß ein aus Axialwinkelscheibe (2) und Käfig (3.2) bestehendes Axiallager (1) gebildet ist.

3. Axialwinkelscheibe (5) nach Anspruch 1, **dadurch gekennzeichnet, daß** die axiale Abwinkelung (5.2) am inneren peripheren Ende des Radialabschnittes (5.1) angeordnet ist und die Haltenase (5.2.1) in eine zugehörige Ausnehmung (7.1, 7.3) eines Gehäuses (7) eingreift, so daß eine aus Axiallager (4) und Gehäuse (7) bestehende unverlierbare Baueinheit gebildet ist.

4. Axialwinkelscheibe (2, 5, 8) nach Anspruch 1, **dadurch gekennzeichnet, daß** die Haltenase (2.2.1, 5.2.1, 8.2.1, 8.3.1) an mehreren gleichmäßig voneinander beabstandeten Umfangsstellen angeordnet ist.

5. Axialwinkelscheibe (5) nach Anspruch 1, **dadurch gekennzeichnet, daß** die Haltenase (5.2.1) in eine umlaufende Nut (7.1, 7.3) eingreift.

6. Axialwinkelscheibe (5) nach Anspruch 5, **dadurch gekennzeichnet, daß** die Nut (7.1, 7.3) im Längsschnitt gesehen einen rechteck- oder einen dreieckförmigen Verlauf nimmt.
